# EUROPEAN PATENT APPLICATION

(11) **EP 4 815 140 A1**
(43) Date of publication of application: **30.09.2026**
(21) Application number: 23959278.5
(22) Date of filing: 24.11.2023
(51) Int. Cl.: H01M 50/242

(54) **BATTERY PACK AND ELECTRICAL DEVICE**

(71) Applicant: Xiamen Ampack Technology Limited, Xiamen City, Fujian Province, 361000 (CN)
(72) Inventor: LI, Kunlong, Xiamen, Fujian 361000 (CN); WANG, Pengfei, Xiamen, Fujian 361000 (CN); NONG, Wenbin, Xiamen, Fujian 361000 (CN)
(74) Representative: Kraus & Lederer PartGmbB
(86) International application number: PCT/CN2023/134094
(87) International publication number: WO 2025/107309

(57) **Abstract**

This application discloses a battery pack and an electric device. The battery pack includes a cell assembly, a housing, a front cover, and an elastic member. The cell assembly is disposed in the housing. The front cover is connected to the housing. The elastic member and the cell assembly are arranged along a first direction, and along the first direction, one side of the elastic member is connected to the housing, and another side of the elastic member is connected to the cell assembly. The housing includes a top wall and a bottom wall, the top wall is connected to the front cover, the bottom wall is connected to the front cover, and a connection strength between the top wall and the front cover is greater than a connection strength between the bottom wall and the front cover, such that when the cell assembly swells, the swelling force acts on the elastic member, the elastic member applies the swelling force to the housing, and as time passes, the cell assembly continues to swell, and the elastic member is compressed to its limit and then breaks open the bottom wall, thereby buffering the pressure of the cell assembly, lowering the risk of pressure burst of the cell assembly, and improving the safety of the battery pack.

## Description

### TECHNICAL FIELD

This application relates to the field of energy storage technologies, and in particular, to a battery pack and an electric device.

### BACKGROUND

At present, battery packs are widely used in drones, electric vehicles, intelligent energy storage devices, and other fields. During use, the battery pack has a situation of swelling, and the battery pack needs to be relieved of pressure.

### SUMMARY

In view of this, it is necessary to provide a battery pack and an electric device, which is conducive to facilitating pressure relief of the cell module and improving safety.

Some embodiments of this application provide a battery pack, including a cell assembly, a housing, a front cover, and an elastic member. The cell assembly is disposed in the housing. The front cover is connected to the housing. The elastic member and the cell assembly are arranged along a first direction, and along the first direction, one side of the elastic member is connected to the housing, and another side of the elastic member is connected to the cell assembly. The housing includes a top wall and a bottom wall, the top wall is connected to the front cover, the bottom wall is connected to the front cover, and a connection strength between the top wall and the front cover is greater than a connection strength between the bottom wall and the front cover, such that when the cell assembly swells, the swelling force acts on the elastic member, the elastic member applies the swelling force to the housing, and as time passes, the cell assembly continues to swell, and the elastic member is compressed to its limit and then breaks open the bottom wall, thereby buffering the pressure of the cell assembly, lowering the risk of pressure burst of the cell assembly, and improving the safety of the battery pack.

In the above one or more optional implementations, the top wall and the bottom wall are arranged along a second direction, the top wall is provided with a first extension portion, and the first extension portion is connected to the front cover. The bottom wall is provided with a second extension portion, the second extension portion is connected to the front cover, and the connection strength between the second extension portion and the front cover is less than the connection strength between the first extension portion and the front cover. The first direction is perpendicular to the second direction. This facilitates the elastic member breaking open the bottom wall, buffering the pressure of the cell assembly, lowering the risk of pressure burst of the cell assembly, and improving the safety of the battery pack.

In the above one or more optional implementations, the first extension portion is fastened and connected to the front cover, which facilitates the elastic member breaking open the bottom wall.

In the above one or more optional implementations, a circuit board is further included, where the circuit board is disposed on the front cover. A first component is provided on a side of the circuit board, the side of the circuit board being a side facing the elastic member. Along the second direction, a distance from the first component to the top wall is L1, and a distance from the first component to the bottom wall is L2, where L1 is less than L2. The first component is set closer to the top wall, and the risk of damage to the first component is caused when the elastic member breaks open the bottom wall and the cell assembly bursts out of the bottom wall.

In the above one or more optional implementations, along the second direction, a distance between the bottom wall and the top wall is L0, and L1 is less than 1/4 L0, further lowering the risk of damage to the first component due to the cell assembly coming into contact with the first component.

In the above one or more optional implementations, along the first direction, the first component protrudes from the circuit board more than other components.

In the above one or more optional implementations, the housing includes a first bent portion, the first bent portion connects to the first extension portion, and the elastic member abuts against the first bent portion, which is conducive to increasing the connection strength between the elastic member and the housing.

In the above one or more optional implementations, the housing includes a second bent portion, and the second bent portion connects to the second extension portion. The elastic member abuts against the second bent portion. This is conducive to increasing the connection strength between the elastic member and the housing.

In the above one or more optional implementations, the elastic member includes a base portion, a buffer portion, and a connection portion, the base portion is connected to the cell assembly, and the buffer portion connects to the connection portion and the base portion. The connection portion is fixed to the housing.

In the above one or more optional implementations, the buffer portion includes a first buffer portion, and the first buffer portion is connected to one side of the base portion.

In the above one or more optional implementations, the buffer portion includes a second buffer portion, along the second direction, the first buffer portion and the second buffer portion are disposed opposite to each other, and the second buffer portion is connected to another side of the base portion.

In the above one or more optional implementations, the connection portion includes a first connection portion, the elastic member includes a third bent portion, and the third bent portion abuts against the first bent portion, which is conducive to increasing the connection strength between the elastic member and the housing.

In the above one or more optional implementations, the connection portion includes a second connection portion, and the first connection portion and the second connection portion are disposed opposite to each other along the second direction. The elastic member includes a fourth bent portion, and the fourth bent portion abuts against the second bent portion. This is conducive to increasing the connection strength between the elastic member and the housing.

In the above one or more optional implementations, the top wall is provided with a first fixing portion, the first connection portion is fixed to the first fixing portion. Along the first direction, a projection of the first fixing portion overlaps with a projection of the first connection portion.

In the above one or more optional implementations, the bottom wall is provided with a second fixing portion, and the second connection portion is fixed to the second fixing portion. Along the first direction, a projection of the second fixing portion overlaps with a projection of the second connection portion.

In the above one or more optional implementations, the housing includes a first side wall, the first side wall connects to the bottom wall and the top wall, and the first side wall is fixedly connected to the front cover. The first side wall is provided with a third fixing portion, and the first connection portion and the second connection portion are fixed to the third fixing portion. This facilitates uniform stress and uniform deformation of the elastic member.

In the above one or more optional implementations, the housing includes a second side wall, the first side wall and the second side wall are arranged along a third direction, and the second side wall is fixedly connected to the front cover. The second side wall connects to the top wall and the bottom wall, the second side wall is provided with a fourth fixing portion, and the first connection portion and the second connection portion are fixed to the fourth fixing portion. The first direction, the second direction, and the third direction are perpendicular to each other. This facilitates uniform stress and uniform deformation of the elastic member.

In the above one or more optional implementations, the first extension portion and the second extension portion are located inside the front cover, which facilitates the connection between the front cover and the housing.

In the above one or more optional implementations, the housing includes a rear wall, the rear wall connects to the top wall and the bottom wall, along the first direction, the cell assembly is located between the elastic member and the rear wall, and a stiffness of the elastic member is less than a stiffness of the rear wall. When the cell assembly swells, the elastic member deforms before the rear wall, and the elastic member provides a swelling space for the cell assembly.

In the above one or more optional implementations, the cell assembly includes a cell unit, the cell unit includes a cell, the cell includes a cell housing, an electrode assembly, and an electrode terminal, the cell housing includes a main body portion, the electrode assembly is disposed in the main body portion, and the electrode terminal is connected to the electrode assembly and extends out of the cell housing. The top wall is provided with two first limiting portions, and the two first limiting portions are arranged along the third direction. The main body portion of each cell unit is disposed between the two first limiting portions. The movement of the cell assembly is guided by the two first limiting portions.

In the above one or more optional implementations, the bottom wall is provided with two second limiting portions, and the two second limiting portions are arranged along the third direction. The main body portion of each cell unit is disposed between the two second limiting portions. The movement of the cell assembly is guided by the two second limiting portions.

In the above one or more optional implementations, the first component includes a fuse apparatus.

In the above one or more optional implementations, the strength of the top wall is greater than the strength of the bottom wall, which facilitates the cell assembly bursting out from a side where the bottom wall is located. This is conducive to further improving the safety of the battery pack.

In the above one or more optional implementations, the battery pack includes a first buffer member, the first buffer member is disposed between the base portion and the first cell unit, and the hardness of the first buffer member is less than the hardness of the base portion, reducing damage to the first cell unit caused by the base portion.

In the above one or more optional implementations, the battery pack includes a second buffer member, the second buffer member is disposed between the second cell unit and the rear wall, and the hardness of the second buffer member is less than the hardness of the rear wall, reducing damage to the second cell unit caused by the rear wall.

In the above one or more optional implementations, the battery pack includes a first conductive member. Along the second direction, a first gap is provided between the base portion and the housing, one end of the first conductive member is connected to the cell assembly, and another end passes through the first gap.

In the above one or more optional implementations, the first conductive member is configured to move with the elastic member, which can reduce pulling on the first conductive member, lower the risk of the first conductive member being pulled off, and improve the safety of the battery pack.

In the above one or more optional implementations, the battery pack includes a second conductive member, a second gap is provided between the base portion and the housing, one end of the second conductive member is connected to the cell assembly, and another end passes through the second gap.

In the above one or more optional implementations, the second conductive member and the elastic member are separately disposed, which is conducive to reducing pulling on the second conductive member, lowering the risk of the second conductive member being pulled off, and improving the safety of the battery pack.

In the above one or more optional implementations, the connection portion is provided with a flange, and the flange is formed by folding the connection portion on a side facing away from the buffer portion in the second direction. Along the first direction, the flange is located between the connection portion and the base portion. The flange can lower the risk of the connection portion cutting the wire harness.

In the above one or more optional implementations, along the first direction, a projection of the flange does not overlap with a projection of the buffer portion, reducing the impact on a deformation region of the buffer portion.

Some embodiments of this application provide an electric device, including the battery pack in any of the above embodiments.

### BRIEF DESCRIPTION OF DRAWINGS

FIG. 1 shows a schematic structural diagram of a battery pack according to some embodiments.
FIG. 2 shows a schematic exploded view of a battery pack according to some embodiments.
FIG. 3 shows a schematic structural diagram of a portion of a battery pack according to some embodiments.
FIG. 4 shows a schematic structural diagram of a portion of a battery pack according to some embodiments.
FIG. 5 shows an enlarged schematic structural view of a portion of the battery pack in FIG. 4.
FIG. 6 shows an enlarged schematic structural view of a portion of the battery pack in FIG. 4.
FIG. 7 shows a schematic structural diagram of a portion of a housing and an elastic member according to some embodiments.
FIG. 8 shows a schematic structural diagram of an elastic member according to some embodiments.
FIG. 9 shows a schematic structural diagram of a top wall according to some embodiments.
FIG. 10 shows a schematic structural diagram of a top wall from another perspective according to some embodiments.
FIG. 11 shows an enlarged schematic structural view of a portion of a top wall in FIG. 10.
FIG. 12 shows a schematic structural diagram of a portion of a housing according to some embodiments.
FIG. 13 shows a schematic structural diagram of a bottom wall according to some embodiments.
FIG. 14 shows an enlarged schematic structural view of a portion of a bottom wall in FIG. 13.
FIG. 15 shows a schematic structural diagram of a portion of a battery pack according to some embodiments.
FIG. 16 shows a schematic structural diagram of a front cover and a circuit board according to some embodiments.
FIG. 17 shows a schematic structural diagram of a circuit board according to some embodiments.
FIG. 18 shows a schematic structural diagram of a circuit board from another perspective according to some embodiments.
FIG. 19 shows a schematic structural diagram of a circuit board and a housing according to some embodiments.
FIG. 20 shows a schematic structural diagram of a portion of a battery pack according to some embodiments.
FIG. 21 shows a schematic structural diagram of a cell according to some embodiments.
FIG. 22 shows a schematic exploded view of the cell in FIG. 21.
FIG. 23 shows a schematic structural diagram of a cell unit according to some embodiments.
FIG. 24 shows a schematic structural diagram of a cell unit from another perspective according to some embodiments.
FIG. 25 shows a schematic structural diagram of a cell unit from still another perspective according to some embodiments.
FIG. 26 shows a schematic structural diagram of a portion of a cell unit according to some embodiments.
FIG. 27 shows a schematic structural diagram of a portion of a cell unit according to some embodiments.
FIG. 28 shows a schematic structural diagram of a cell unit from yet another perspective according to some embodiments.
FIG. 29 shows a schematic structural diagram for testing a battery pack according to some embodiments.
FIG. 30 shows a schematic structural diagram of an electric device according to some embodiments.

Reference signs of main components:
100. Battery pack; 10. Housing; 10a. Housing; 10b. Front cover; 101b. Second hole; 11. Top wall; 111. First extension; 1111. First hole; 112. First bent portion; 11a. First fixing port; 11b. First limiting portion; 12. Bottom wall; 121. Second extension; 122. Second bent portion; 12a. Second fixing port; 12b. Second limiting portion; 13. First side wall; 131. First fixing member; 13a. Third fixing portion; 14. Second side wall; 14a. Fourth fixing portion; 141. Second fixing member; 15. Rear wall; 16. Cover body; 20. Cell assembly; 20a. Cell unit; 201. First cell unit; 202. Second cell unit; 21. Cell; 21a. Cell housing; 211. Main body portion; 211c. First wall; 211d. Second wall; 2111. First housing; 2111a. First recess; 2112. Second housing; 2112a. Second recess; 2113. First extension; 2114. Second extension; 212. Sealing portion; 212a. First sealing portion; 2121. First sealing component; 2122. First sealing body; 212b. Second sealing portion; 21b. Electrode assembly; 21c. Electrode terminal; 22. Bracket; 22a. First bracket; 22b. Second bracket; 221. First portion; 222. First side portion; 224. First side extension; 226. Second portion; 227. Protrusion; 227a. Accommodation portion; 228. Notch; 30. Elastic member; 301. First gap; 302. Second gap; 31. Base portion; 32. Buffer portion; 321. First buffer portion; 321a. First segment; 321b. Second segment; 322. Second buffer portion; 322a. Third segment; 322b. Fourth segment; 33. Connection portion; 331. First connection portion; 332. Second connection portion; 333. Flange; 34. Third bent portion; 35. Fourth bent portion; 40. Circuit board; 41. First component; 50. First conductive member; 60. Second conductive member; 70. Sampling member; 101. Fastener; 102. First connection portion; 103. Second connection portion; 104. Wire; 110. First insulating member; 120. First buffer member; 130. Second buffer member; 200. Electric device; 500. Jack pressurizing device; 501, 502. Steel plate; X. First direction; Y. Second direction; Z. Third direction.

This application is further described with reference to the accompanying drawings in the following specific embodiments.

### DETAILED DESCRIPTION

The following describes the technical solutions in some embodiments of this application with reference to the accompanying drawings in these embodiments of this application. Apparently, the described embodiments are some but not all embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween.

Unless otherwise defined, all technical and scientific terms used herein shall have the same meanings as commonly understood by persons skilled in the art to which this application relates. The terms used in the specification of this application are intended to merely describe the specific embodiments rather than to limit this application. The term "and/or" used herein includes any and all combinations of one or more associated items listed.

It should be understood that in consideration of the factors of actual processing tolerances, the term "perpendicular" in the technical solution of this application is used to describe the ideal state between two components. During actual production or use, an approximately perpendicular state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, all technical and scientific terms used herein shall have the same meanings as commonly understood by persons skilled in the art to which this application relates. The terms used in the specification of this application are intended to merely describe the specific embodiments rather than to limit this application.

The terms "left", "right", "top", "bottom", "front", "rear", and other similar expressions as used herein are for illustration only and are not intended to limit this application.

Unless otherwise defined, the term "a plurality of" in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

For ease of description, some electrode terminals are not shown in a bent state in the accompanying drawings.

Some embodiments of this application provide a battery pack, including a cell assembly, a housing, a front cover, and an elastic member. The cell assembly is disposed in the housing. The front cover is connected to the housing. The elastic member and the cell assembly are arranged along a first direction, and along the first direction, one side of the elastic member is connected to the housing, and another side of the elastic member is connected to the cell assembly. The housing includes a top wall and a bottom wall, the top wall is connected to the front cover, the bottom wall is connected to the front cover, and the connection strength between the top wall and the front cover is greater than the connection strength between the bottom wall and the front cover, such that when the cell assembly swells, the swelling force acts on the elastic member, the elastic member applies the swelling force to the housing, and as time passes, the cell assembly continues to swell, and the elastic member is compressed to its limit and then breaks open the bottom wall, thereby buffering the pressure of the cell assembly, lowering the risk of pressure burst of the cell assembly, and improving the safety of the battery pack.

The following describes in detail some implementations of this application with reference to the accompanying drawings. In absence of conflicts, the following implementations and features in some implementations may be combined.

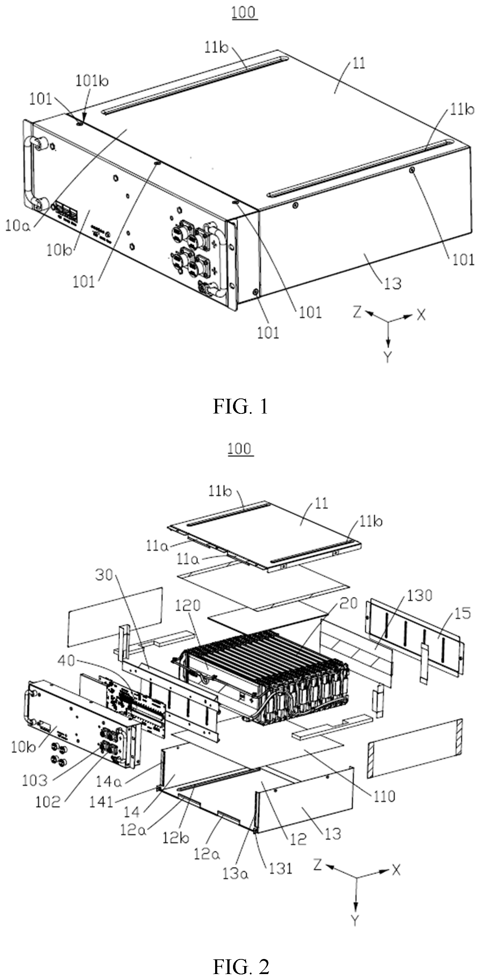

Referring to FIG. 1 and FIG. 2, one embodiment of this application provides a battery pack 100, including a housing 10a, a cell assembly 20, and a front cover 10b. The cell assembly 20 is disposed in the housing 10a, and the front cover 10b is connected to the housing 10a.

In some embodiments, the battery pack 100 includes an elastic member 30, the elastic member 30 is disposed in the housing 10a, and the elastic member 30 and the cell assembly 20 are arranged along a first direction X. Along the first direction X, one side of the elastic member 30 is connected to the housing 10a, and another side of the elastic member 30 is connected to the cell assembly 20.

In some embodiments, the elastic member 30 is configured to apply pressure to the cell assembly 20 and provide a swelling space for the cell assembly 20.

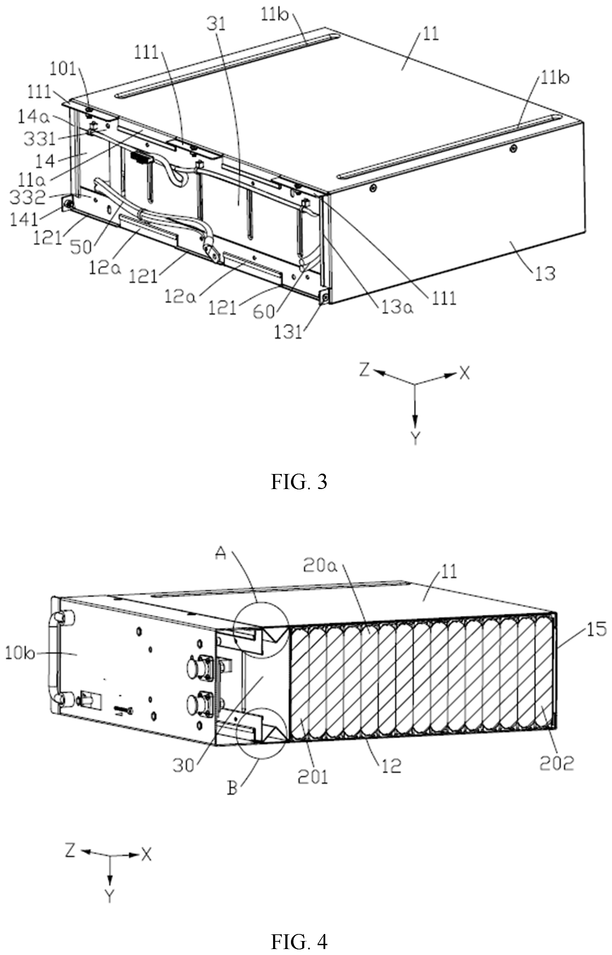

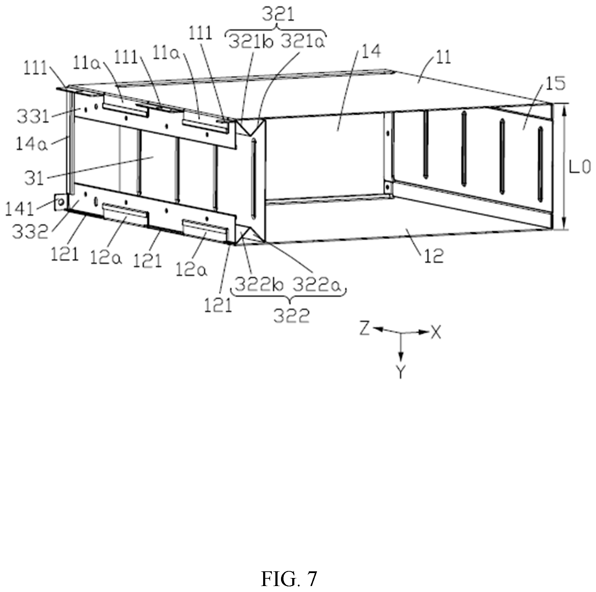

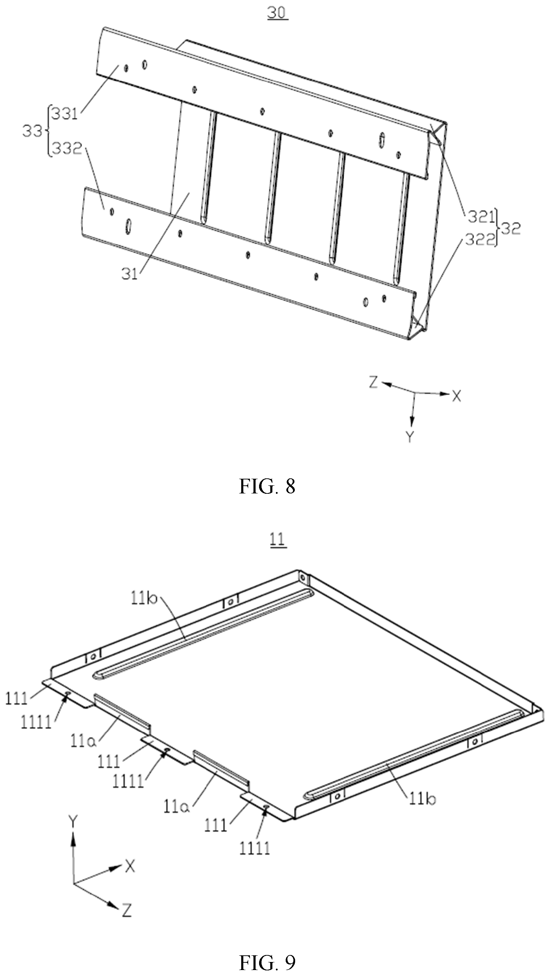

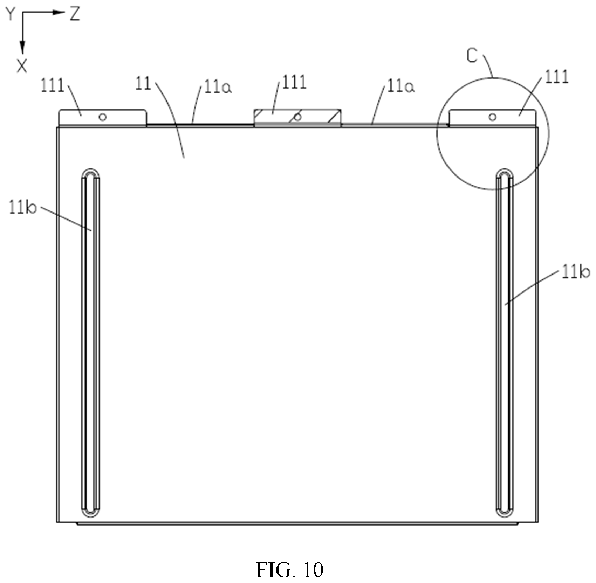

Referring to FIG. 3 to FIG. 14, in some embodiments, in some embodiments, the housing 10a includes a top wall 11, and the top wall 11 is connected to the front cover 10b.

In some embodiments, the housing 10a includes a bottom wall 12, the top wall 11 and the bottom wall 12 are arranged along a second direction Y, and the first direction X is perpendicular to the second direction Y.

In some embodiments, a connection strength between the top wall 11 and the front cover 10b is greater than a connection strength between the bottom wall 12 and the front cover 10b, such that when the cell assembly 20 swells, the swelling force acts on the elastic member 30, the elastic member 30 applies the swelling force to the housing 10a, and as time passes, the cell assembly 20 continues to swell, and the elastic member 30 is compressed to its limit and then breaks open the bottom wall 12, thereby buffering the pressure of the cell assembly 20, lowering the risk of pressure burst of the cell assembly 20, and improving the safety of the battery pack 100. The connection strength refers to the ability to resist fracture or deformation after withstanding the swelling force of the cell assembly 20. It can be understood that in some other embodiments, there is also a situation where the elastic member 30 is not compressed to its limit, and the cell assembly 20 breaks open the bottom wall 12.

In some embodiments, the top wall 11 is provided with a first extension portion 111, and the first extension portion 111 is connected to the front cover 10b.

In some embodiments, the first extension portion 111 is fixed to the front cover 10b.

In some embodiments, the first extension portion 111 and the top wall 11 are integrally formed. For example, the first extension portion 111 and the top wall 11 are integrally formed by an injection molding process. For example, the first extension portion 111 and the top wall 11 are formed by bending or stamping a metal plate.

In some embodiments, the first extension portion 111 may be fixed to the top wall 11 in other manners, including but not limited to welding and adhesion.

In some embodiments, the bottom wall 12 is provided with a second extension portion 121, and the second extension portion 121 is connected to the front cover 10b. Optionally, the second extension portion 121 is connected to an inner surface of the front cover 10b.

In some embodiments, the connection strength between the first extension portion 111 and the front cover 10b is greater than the connection strength between the second extension portion 121 and the front cover 10b, which facilitates the cell assembly 20 bursting out from a side of the bottom wall 12, buffering the pressure inside the housing 10a.

In some embodiments, the second extension portion 121 and the bottom wall 12 are integrally formed. For example, the second extension portion 121 and the bottom wall 12 are integrally formed by an injection molding process. For example, the second extension portion 121 and the bottom wall 12 are formed by bending or stamping a metal plate.

In some embodiments, the second extension portion 121 may be fixed to the bottom wall 12 in other manners, including but not limited to welding and adhesion.

In some embodiments, the second extension portion 121 is directly connected to the inner surface of the front cover 10b, where direct connection means that the second extension portion 121 and the front cover 10b are directly connected without being connected through other components.

In some embodiments, the first extension portion 111 is fastened to the front cover 10b, and the fastening method includes but is not limited to fastener fixation, welding, and adhesion.

In some embodiments, the battery pack 100 includes a fastener 101, the first extension portion 111 is provided with a first hole 1111, the front cover 10b is provided with a second hole 101b, and the fastener 101 is disposed in the first hole 1111 and the second hole 101b, such that the first extension portion 111 is fastened to the front cover 10b. Optionally, the fastener 101 includes a screw.

In some embodiments, the housing 10a includes a first bent portion 112, and the first extension portion 111 connects to the first bent portion 112. The elastic member 30 abuts against the first bent portion 112, which is conducive to increasing the connection strength between the elastic member 30 and the housing 10a.

In some embodiments, the housing 10a includes a second bent portion 122, the second extension portion 121 connects to the second bent portion 122, and the elastic member 30 abuts against the second bent portion 122, which is conducive to increasing the connection strength between the elastic member 30 and the housing 10a.

In some embodiments, the strength of the top wall 11 is greater than the strength of the bottom wall 12, which further facilitates the cell assembly 20 bursting out from a side where the bottom wall 12 is located. This is conducive to further improving the safety of the battery pack 100.

In some embodiments, along the second direction Y, a distance between the top wall 11 and the bottom wall 12 is greater than a distance between the first extension portion 111 and the second extension portion 121, the first extension portion 111 and the second extension portion 121 connect the inner wall of the front cover 10b, which facilitates the connection between the housing 10a and the front cover 10b.

In some embodiments, the top wall 11 is provided with a first fixing portion 11a, along the first direction X, a projection of the first fixing portion 11a overlaps with a projection of the elastic member 30, and the elastic member 30 is fixed to the first fixing portion 11a.

In some embodiments, fixing includes but is not limited to abutting, adhesion, welding, fastener locking fixation, and snap connection.

In some embodiments, the top wall 11 is provided with a plurality of first extension portions 111, and the first fixing portion 11a is disposed between adjacent first extension portions 111, which facilitates uniform stress and uniform deformation of the elastic member 30.

In some embodiments, the bottom wall 12 is provided with a second fixing portion 12a, along the first direction X, a projection of the second fixing portion 12a overlaps with a projection of the elastic member 30, and the elastic member 30 is fixed to the second fixing portion 12a.

In some embodiments, the bottom wall 12 is provided with a plurality of second fixing portions 12a, and the plurality of second fixing portions 12a are disposed between adjacent second extension portions 121, which facilitates uniform stress and uniform deformation of the elastic member 30.

In some embodiments, the first fixing portion 11a and the second fixing portion 12a are arranged along the second direction Y, which facilitates uniform stress and uniform deformation of the elastic member 30.

In some embodiments, the housing 10a includes a first side wall 13, and the first side wall 13 connects to the top wall 11 and the bottom wall 12.

In some embodiments, the first side wall 13 is provided with a first fixing member 131, and the first fixing member 131 is fixedly connected to the front cover 10b. Optionally, the first side wall 13 and the front cover 10b are locked and connected by the fastener 101 passing through the front cover 10b and the first fixing member 131.

In some embodiments, along the second direction Y, one side of the first side wall 13 is fixedly connected to the top wall 11, and another side is the first side wall 13 directly connected to the bottom wall 12, which facilitates the elastic member 30 breaking open the bottom wall 12. Optionally, the first side wall 13 is locked and connected to the front cover 10b and the top wall 11 by the fastener 101.

In some embodiments, the housing 10a includes a second side wall 14, the second side wall 14 connects to the top wall 11 and the bottom wall 12. The first side wall 13 and the second side wall 14 are arranged along a third direction Z. The first direction X, the second direction Y, and the third direction Z are perpendicular to each other.

In some embodiments, the second side wall 14 is provided with a second fixing member 141, and the second fixing member 141 is fixedly connected to the front cover 10b. Optionally, the second side wall 14 and the front cover 10b are locked and connected by the fastener 101 passing through the front cover 10b and the second fixing member 141.

In some embodiments, along the second direction Y, one side of the second side wall 14 is fixedly connected to the top wall 11, and another side the second side wall 14 is directly connected to the bottom wall 12, which facilitates the elastic member 30 breaking open the bottom wall 12. Optionally, the second side wall 14 is locked and connected to the front cover 10b and the top wall 11 by the fastener 101.

In some embodiments, the first side wall 13 is provided with a third fixing portion 13a, and the elastic member 30 is fixed to the third fixing portion 13a. Optionally, the elastic member 30 abuts against the third fixing portion 13a.

In some embodiments, the second side wall 14 is provided with a fourth fixing portion 14a, and the third fixing portion 13a and the fourth fixing portion 14a are arranged along the third direction Z. The elastic member 30 is fixed to the fourth fixing portion 14a. Optionally, the elastic member 30 abuts against the fourth fixing portion 14a.

Along the first direction X, a projection of the fourth fixing portion 14a overlaps with a projection of the elastic member 30, and the fourth fixing portion 14a abuts against a side of the elastic member 30, the side of the elastic member 30 being a side facing away from the cell assembly 20.

By means of the first fixing portion 11a, the second fixing portion 12a, the third fixing portion 13a, and the fourth fixing portion 14a, two sides of the elastic member 30 along the second direction Y and two sides along the third direction Z both abut against the housing 10a, which facilitates uniform stress and uniform deformation of the elastic member 30.

In some embodiments, the housing 10a includes a rear wall 15, and the rear wall 15 connects to the top wall 11, the bottom wall 12, the first side wall 13, and the second side wall 14. Along the first direction X, the cell assembly 20 is located between the elastic member 30 and the rear wall 15.

In some embodiments, a stiffness of the elastic member 30 is greater than a stiffness of the rear wall 15. When the cell assembly 20 swells, the elastic member 30 deforms before the rear wall 15, and the elastic member 30 provides a swelling space for the cell assembly 20.

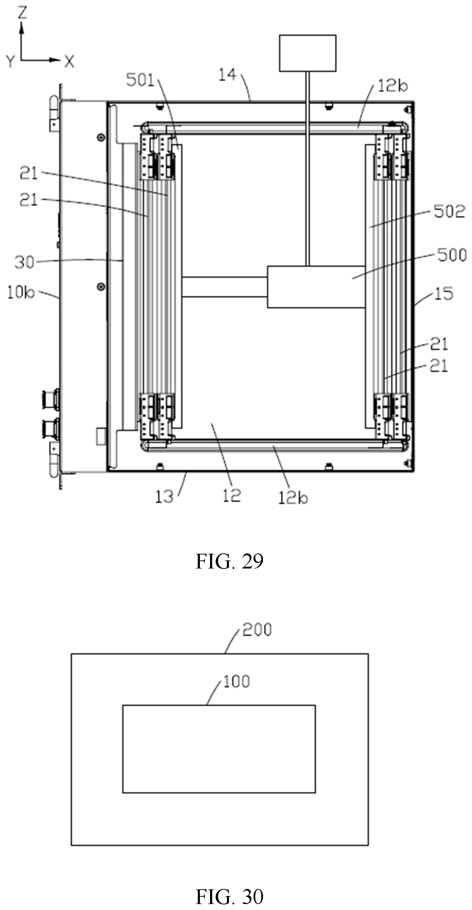

In some embodiments, referring to FIG. 29, FIG. 29 shows a diagram for testing connection strength, where the top wall 11 is not shown. The wire harness and a part of the cell assembly 20 are removed, and a jack pressurizing apparatus 500 is placed inside the battery pack 100 to test the connection strength. After the jack pressurizing apparatus 500 is placed into the housing 10a, the top wall 11 is refixed to the front cover 10b. Two cells are disposed between the jack pressurizing apparatus 500 and the elastic member 30, a steel plate 501 is disposed between the cells and the jack pressurizing apparatus 500, and the force from the jack pressurizing apparatus 500 is transmitted to the elastic member 30 through the steel plate 501 and the cells. Along the first direction X, a projection of the main body portion 211 is located within a projection of the steel plate 501. Two cells are disposed between the jack pressurizing apparatus 500 and the rear wall 15, another steel plate 502 is disposed between the cells and the jack pressurizing apparatus 500, and the force from the jack pressurizing apparatus 500 is transmitted to the rear wall 15 through the steel plate 502 and the cells.

During the test, the jack pressurizing apparatus 500 moves 0.6 mm each time, and the jack pressurizing apparatus 500 moves once every 36s until the bottom wall 12 separates from the front cover 10b, at this time, the top wall 11 and the front cover 10b are not separated.

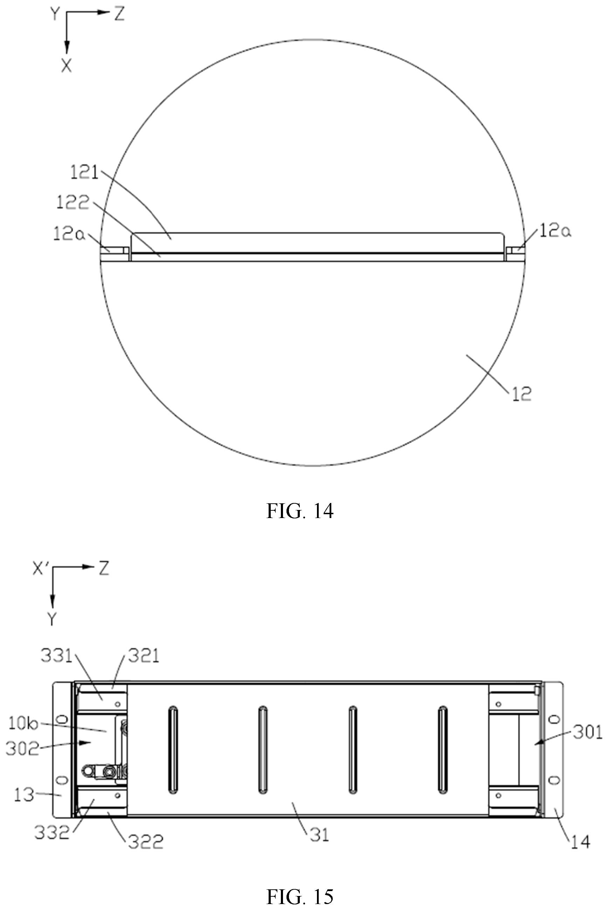

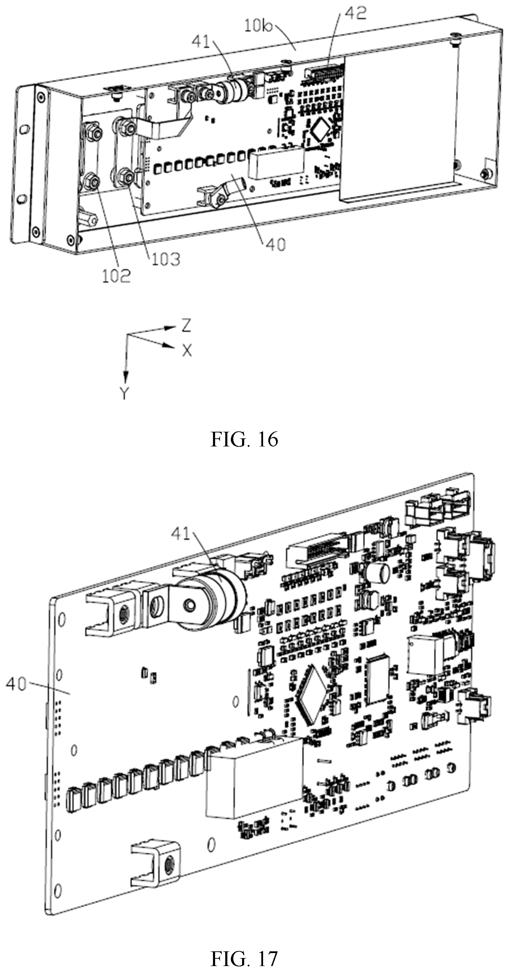

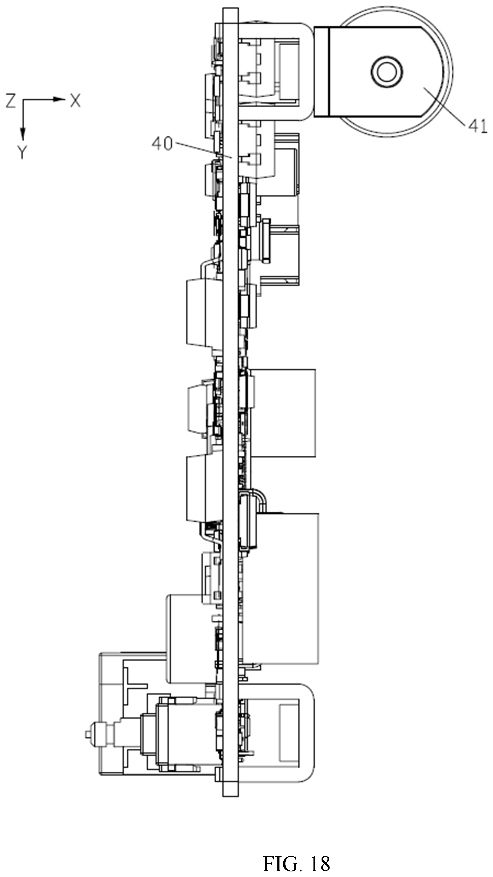

Referring to FIG. 15 to FIG. 19, in some embodiments, the battery pack 100 includes a circuit board 40, and the circuit board 40 is disposed in the front cover 10b. A first component 41 is provided on a side of the circuit board 40, the side of the circuit board 40 being a side facing the elastic member 30.

In some embodiments, the first component 41 includes a fuse apparatus.

In some embodiments, the fuse apparatus may be a circuit breaker. As an example, the circuit breaker may be a fuse or a short-circuit apparatus having a fuse structure.

In some implementations, the fuse apparatus may be disposed at a power circuit of the battery pack 100. It can be understood that, optionally, the power circuit of the battery pack 100 may include a discharge circuit for the battery pack 100 to discharge externally, and may also include a charging circuit for charging the battery pack 100.

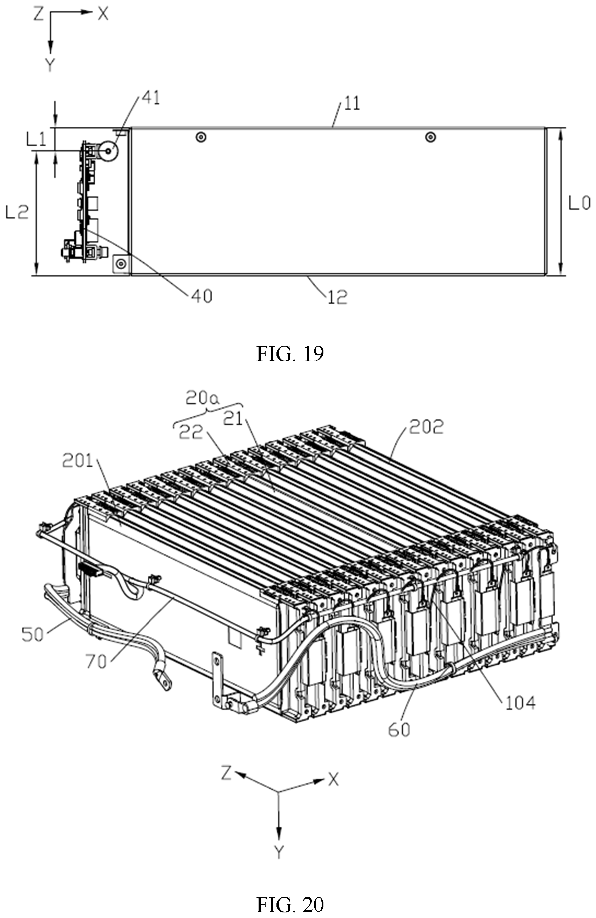

Referring to FIG. 19, in some embodiments, along the second direction Y, a distance from the first component 41 to the top wall 11 is L1, and a distance from the first component 41 to the bottom wall 12 is L2, where L1 is less than L2. The first component 41 is set closer to the top wall 11, and the risk of damage to the first component 41 when the elastic member 30 breaks open the bottom wall 12 and the cell assembly 20 bursts out of the bottom wall 12.

In some embodiments, when measuring L1 and L2, a test position on the first component 41 is the highest point where the first component 41 protrudes from the circuit board 40.

In some embodiments, along the second direction Y, a distance between the bottom wall 12 and the top wall 11 is L0, and L1 is less than 1/4 L0, further lowering the risk of damage to the first component 41 due to the cell assembly 20 coming into contact with the first component 41.

In some embodiments, along the first direction X, the first component 41 protrudes from the circuit board 40 more than other components.

Optionally, the circuit board 40 includes a BMS component (Battery Management System), and the BMS component includes a plurality of electronic components, where the plurality of electronic components can implement functions such as control, protection, communication, power calculation, signal transmission, and electric energy transmission for the cell assembly 20.

Optionally, the circuit board 40 includes a flexible printed board (FPC, Flexible Printed Circuit). Optionally, the circuit board 40 includes a printed circuit board (PCB, Printed Circuit Board).

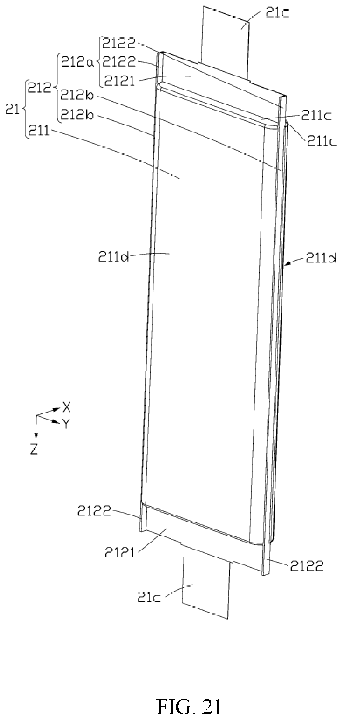

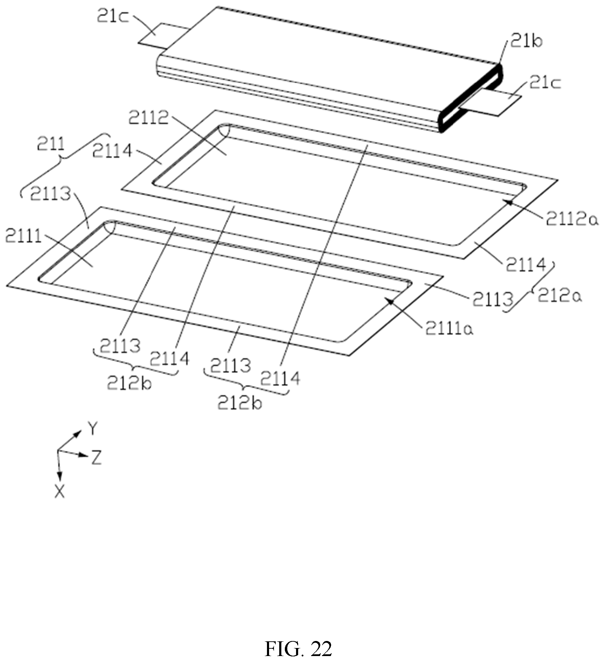

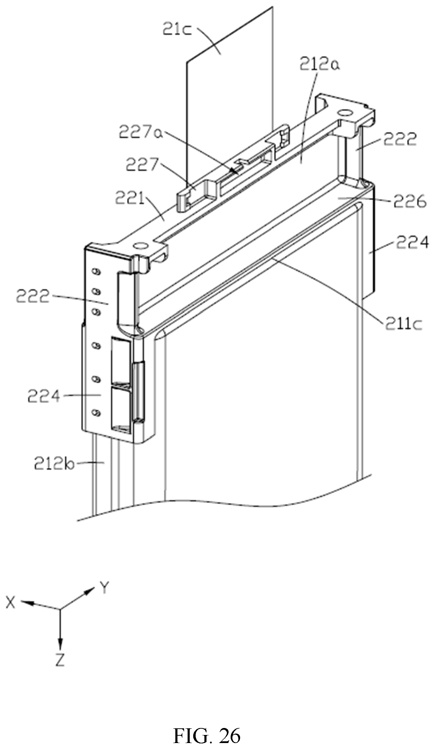

Referring to FIG. 20 to FIG. 28, in some embodiments, the cell assembly 20 includes a plurality of cell units 20a, and the plurality of cell units 20a are stacked along the first direction X.

In some embodiments, the cell unit 20a includes a first cell unit 201 and a second cell unit 202, and the first cell unit 201 and the second cell unit 202 are cell units located at the outermost side of the cell assembly 20, where the first cell unit 201 is connected to the elastic member 30, and the second cell unit 202 is connected to the rear wall 15.

In some embodiments, the cell unit 20a includes a cell 21, the cell 21 includes a cell housing 21a, an electrode assembly 21b, and an electrode terminal 21c, where the cell housing 21a includes a main body portion 211, the electrode assembly 21b is disposed in the main body portion 211, and the electrode terminal 21c is connected to the electrode assembly 21b and extends out of the cell housing 21a.

In some embodiments, the cell unit 20a is connected to the bottom wall 12, and the cell unit 20a is configured such that when the cell 21 swells, along the direction opposite to the first direction X, the cell unit 20a moves relative to the bottom wall 12.

In some embodiments, the cell unit 20a is connected to the bottom wall 12, and the cell unit 20a is configured such that when the swelling of the cell 21 decreases, along the first direction X, the cell unit 20a moves relative to the bottom wall 12.

In some embodiments, the battery pack 100 includes a first insulating sheet 110, and the first insulating sheet 110 is disposed between the bottom wall 12 and the cell assembly 20, enhancing the insulation between the cell assembly 20 and the bottom wall 12.

In some embodiments, the cell assembly 20 is connected to the first insulating sheet 110, for example, the cell assembly 20 is in direct contact with the first insulating sheet 110. The cell unit 20a is configured such that when the cell unit 20a swells, along the direction opposite to the first direction X, the cell unit 20a moves on the first insulating sheet 110.

In some embodiments, the cell assembly 20 is connected to the first insulating sheet 110, for example, the cell assembly 20 is in direct contact with the first insulating sheet 110. The cell unit 20a is configured such that when the swelling of the cell 21 decreases, along the first direction X, the cell unit 20a moves on the first insulating sheet 110.

In some embodiments, a friction coefficient between the cell unit 20a and the first insulating sheet 110 is less than a friction coefficient between the cell unit 20a and the bottom wall 12, which facilitates the movement of the cell unit 20a.

In some embodiments, the cell housing 21a includes a sealing portion 212, the sealing portion 212 connects to the main body portion 211, and the electrode terminal 21c extends out of the cell housing 21a from the sealing portion 212.

In some embodiments, the main body portion 211 includes a first housing 2111 and a second housing 2112, the first housing 2111 is provided with a first recess 2111a, and the second housing 2112 is provided with a second recess 2112a. The first housing 2111 is connected to the second housing 2112 and forms an accommodation space. A part of the electrode assembly 21b is disposed in the first recess 2111a, and a part is disposed in the second recess 2112a. A peripheral side of the first housing 2111 extends outward to form a first extension edge 2113, a peripheral side of the second housing 2112 extends outward to form a second extension edge 2114, after the first housing 2111 is connected to the second housing 2112, the first extension edge 2113 and the second extension edge 2114 overlap and are sealingly connected, forming the sealing portion 212.

In some embodiments, the sealing portion 212 includes a first sealing portion 212a, and the electrode terminal 21c extends out of the cell housing 21a from the first sealing portion 212a.

In some embodiments, the sealing portion 212 includes a second sealing portion 212b, and the second sealing portion 212b is connected to the first sealing portion 212a.

In some embodiments, the first extension edge 2113 and the second extension edge 2114 overlap and are sealingly connected to form two first sealing portions 212a and two second sealing portions 212b. The two first sealing portions 212a are arranged along the third direction Z, and the two second sealing portions 212b are arranged along the second direction Y, where one first sealing portion 212a is connected to the two second sealing portions 212b, and another first sealing portion 212a is connected to the two second sealing portions 212b.

In some embodiments, the cell 21 includes two electrode terminals 21c, one electrode terminal 21c extends out of the cell housing 21a from one of the two first sealing portions 212a, and another electrode terminal 21c extends out of the cell housing 21a from another of the two first sealing portions 212a.

In some embodiments, the two electrode terminals 21c extend out of the cell housing 21a from the same first sealing portion 212a.

In one embodiment, adjacent main body portions 211 are in direct contact with each other, which facilitates pressurization the main body portions 211.

In one embodiment, adjacent cell housings 21a are under pressure relative to each other, such that the plurality of cell units 20a are in a pressurized state, which is conducive to prolonging the service life of the cell units 20a.

In some embodiments, the first sealing portion 212a includes a first sealing connection portion 2121 and two first sealing bent portions 2122, and the first sealing connection portion 2121 connects to the two first sealing bent portions 2122. The two first sealing bent portions 2122 are disposed opposite to each other along the second direction Y. The electrode terminal 21c extends out of the cell housing 21a from the first sealing connection portion 2121.

In some embodiments, the cell housing 21a includes an aluminum-plastic film.

In some embodiments, the cell 21 includes but is not limited to a pouch cell, a prismatic cell, and a cylindrical cell.

In some embodiments, each cell unit 20a further includes a bracket 22, and the bracket 22 covers at least a part of the cell housing 21a.

In some embodiments, the bracket 22 is configured such that when the cell 21 swells, along the direction opposite to the first direction X, the bracket 22 moves relative to the housing 10a.

In some embodiments, the bracket 22 is configured such that when the swelling of the cell 21 decreases, along the first direction X, the bracket 22 moves relative to the housing 10a.

In some embodiments, the bracket 22 is connected to the bottom wall 12, and the bracket 22 is configured such that when the cell 21 swells, along the direction opposite to the first direction X, the bracket 22 moves relative to the bottom wall 12.

In some embodiments, the bracket 22 is connected to the bottom wall 12, and the bracket 22 is configured such that when the swelling of the cell 21 decreases, along the first direction X, the bracket 22 moves relative to the bottom wall 12.

In some embodiments, the bracket 22 is in direct contact with the first insulating sheet 110, and the bracket 22 is configured such that when the cell 21 swells, along the direction opposite to the first direction X, the bracket 22 moves on the first insulating sheet 110.

In some embodiments, the bracket 22 is in direct contact with the first insulating sheet 110, and the bracket 22 is configured such that when the swelling of the cell 21 decreases, along the first direction X, the bracket 22 moves on the first insulating sheet 110.

In some embodiments, the bracket 22 is integrally formed on the cell 21, which can increase the connection strength between the bracket 22 and the cell 21. Integral forming means that the bracket 22 is directly fixed to the cell 21. The methods of integral forming include but are not limited to a potting process and an injection molding process.

In some embodiments, after an insulating material is disposed around the cell 21 by a potting process, the insulating material is cured to form the bracket 22, and the bracket 22 is adhesively fixed to the cell 21. For example, the cell 21 is placed into a mold, the insulating material is poured into a mold, and after the insulating material is cured to form the bracket 22 and is adhesively fixed to the cell 21, the bracket 22 and the cell 21 are taken out from the mold.

In some embodiments, the insulating material includes but is not limited to potting adhesive and foaming adhesive.

In some embodiments, the injection molding process includes placing the cell 21 into a mold, an injection molding device heats and melts the insulating material, the molten insulating material flows into the mold, and after the insulating material is cured to form the bracket 22 and is adhesively fixed to the cell 21, the bracket 22 and the cell 21 are taken out from the mold. Optionally, the insulating material includes polyamide.

In some embodiments, the bracket 22 is an insulating bracket, which can lower the risk of short circuit between the bracket 22 and the cell 21.

In some embodiments, the bracket 22 includes a first bracket 22a, and the first bracket 22a covers at least a part of the sealing portion 212.

In some embodiments, the first bracket 22a includes at least one first side portion 222, and each first side portion 222 covers one first sealing bent portion 2122. The first bracket 22a covers a part of the first sealing portion 212a, increasing the protection of the first sealing portion 212a.

In some embodiments, the first side portion 222 is connected to the bottom wall 12, and the first side portion 222 is configured such that when the cell 21 swells, along the direction opposite to the first direction X, the first side portion 222 moves relative to the bottom wall 12.

In some embodiments, the first side portion 222 is connected to the bottom wall 12, and the first side portion 222 is configured such that when the swelling of the cell 21 decreases, along the first direction X, the first side portion 222 moves relative to the bottom wall 12.

In some embodiments, the first side portion 222 is connected to the first insulating sheet 110, and the first side portion 222 is configured such that when the cell 21 swells, along the direction opposite to the first direction X, the first side portion 222 moves on the first insulating sheet 110. For example, the first side portion 222 is in direct contact with the first insulating sheet 110.

In some embodiments, the first side portion 222 is connected to the first insulating sheet 110, and the first side portion 222 is configured such that when the swelling of the cell 21 decreases, along the first direction X, the first side portion 222 moves on the first insulating sheet 110. For example, the first side portion 222 is in direct contact with the first insulating sheet 110.

In some embodiments, the first bracket 22a includes two first side portions 222, and the first side portions 222 are arranged along the second direction Y. One of the first side portions 222 is connected to the first insulating sheet 110.

When the cell 21 swells, the first sealing portion 212a can move relative to the first insulating sheet 110 through the first side portion 222, and through the first side portion 222, the friction between the first sealing portion 212a and the first insulating sheet 110 during movement can be reduced, facilitating movement and protecting the first sealing portion 212a, lowering the risk of damage to the first sealing portion 212a affecting the use of the battery pack 100.

In some embodiments, the first bracket 22a includes a first portion 221, and the first portion 221 covers at least a part of the first sealing connection portion 2121, improving the protection of the first sealing portion 212a.

In some embodiments, along the second direction Y, one end of the first portion 221 is connected to one first side portion 222, and another end is connected to another first side portion 222, which can increase the structural strength of the first bracket 22a and is conducive to protecting the first sealing portion 212a.

In some embodiments, the first bracket 22a includes at least one first side extension portion 224, the first side extension portion 224 covers a part of the main body portion 211, and the first side extension portion 224 can protect the main body portion 211 and can increase the connection strength between the first bracket 22a and the cell 21.

In some embodiments, the first bracket 22a includes at least one first side extension portion 224, the first side extension portion 224 covers a part of the main body portion 211 and one second sealing portion 212b, and the first side extension portion 224 and the second sealing portion 212b are located on the same side of the main body portion 211. The first side extension portion 224 can protect the main body portion 211 and the second sealing portion 212b, and can increase the connection strength between the first bracket 22a and the cell 21.

In some embodiments, the first bracket 22a includes two first side extension portions 224, and the two first side extension portions 224 are arranged along the second direction Y. One of the two first side extension portion 224 covers a part of the main body portion 211 and one second sealing portion 212b, and the first side extension portion 224 and the second sealing portion 212b are located on the same side of the main body portion 211. The other of the two first side extension portion 224 covers a part of the main body portion 211 and another second sealing portion 212b, and the first side extension portion 224 and the second sealing portion 212b are located on the same side of the main body portion 211. The first side extension portion 224 can protect the main body portion 211 and the second sealing portion 212b, and can increase the connection strength between the first bracket 22a and the cell 21.

In some embodiments, the first side extension portion 224 is connected to the bottom wall 12, and the first side extension portion 224 is configured such that when the cell 21 swells, along the direction opposite to the first direction X, the first side extension portion 224 moves relative to the bottom wall 12.

In some embodiments, the first side extension portion 224 is connected to the bottom wall 12, and the first side extension portion 224 is configured such that when the swelling of the cell 21 decreases, along the first direction X, the first side extension portion 224 moves relative to the bottom wall 12.

In some embodiments, the first side extension portion 224 is connected to the first insulating sheet 110, and the first side extension portion 224 is configured such that when the cell 21 swells, along the direction opposite to the first direction X, the first side extension portion 224 moves on the first insulating sheet 110. For example, the first side extension portion 224 is in direct contact with the first insulating sheet 110.

In some embodiments, the first side extension portion 224 is connected to the first insulating sheet 110, and the first side extension portion 224 is configured such that when the swelling of the cell 21 decreases, along with the first direction X, the first side extension portion 224 moves on the first insulating sheet 110. For example, the first side extension portion 224 is in direct contact with the first insulating sheet 110.

When the cell 21 swells, the main body portion 211 may move on the first insulating sheet 110 through the first side extension portion 224, and through the first side extension portion 224, the friction between the main body portion 211 and the first insulating sheet 110 during movement can be reduced, facilitating movement and protecting the main body portion 211, lowering the risk of damage to the main body portion 211 affecting the use of the battery pack 100.

In some embodiments, the first side extension portion 224 extends from the first side portion 222, which is conducive to increasing the connection strength between the first side extension portion 224 and the first side portion 222.

In some embodiments, the main body portion 211 includes a first wall 211c, and the first sealing portion 212a is connected to the first wall 211c.

In some embodiments, the first bracket 22a includes a second portion 226, the second portion 226 covers a part of the first wall 211c, protecting the main body portion 211. One end of the first portion 221 is connected to one first side portion 222, another end is connected to another first side portion 222, one end of the second portion 226 is connected to one first side portion 222, and another end is connected to another first side portion 222, which can further increase the structural strength of the first bracket 22a and is further conducive to protecting the first sealing portion 212a.

In some embodiments, the first bracket 22a includes two second portions 226 and two first walls 211c.

In some embodiments, the first bracket 22a includes a protrusion 227, and along the direction opposite to the second direction Y, the protrusion 227 protrudes from the first portion 221.

In some embodiments, the battery pack 100 includes a detection member (not shown in the drawings), an accommodation groove 227a is provided on one side of the protrusion 227, the sided of the protrusion 227 being a side facing away from the electrode terminal 21c, and the detection member is accommodated in the accommodation groove 227a. The detection member is configured to detect the temperature of the cell 21. Optionally, the detection member is configured to detect the temperature of the electrode terminal 21c, which is conducive to improving the accuracy of detecting the temperature of the cell 21.

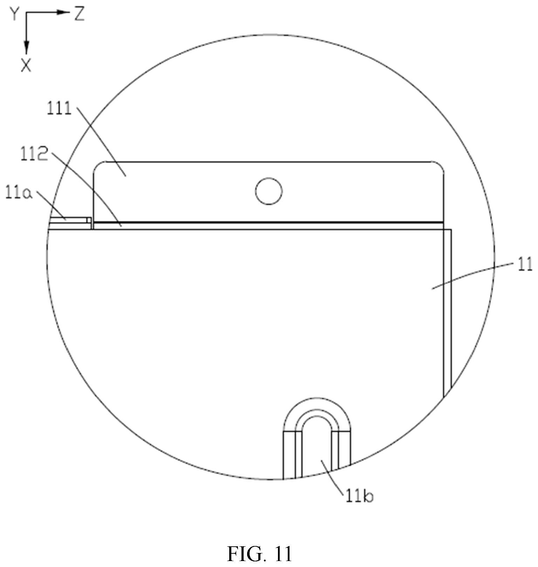

Referring to FIG. 11, when viewed along the direction opposite to the first direction X, the electrode terminal 21c is not blocked by the protrusion 227. In some embodiments, the main body portion 211 includes two second walls 211d, and the two second walls 211d are arranged the first direction X. The first wall 211c connects to the second wall 211d and the first sealing portion 212a.

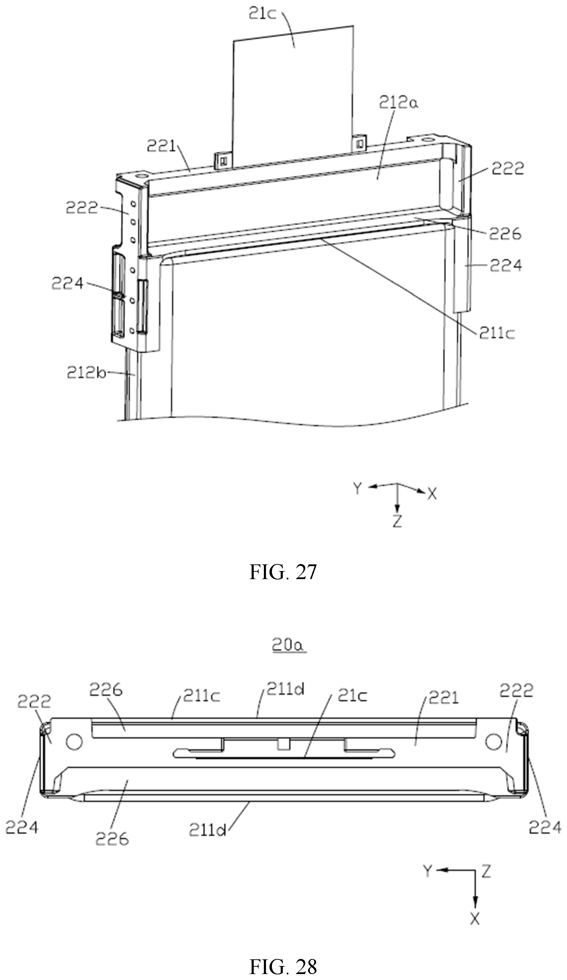

In some embodiments, referring to FIG. 28, when viewed along the third direction Z, in the first direction X, the second portion 226 does not exceed the second wall 211d, the main body portions 211 of adjacent cells 21 can be in direct contact with each other, and adjacent cells 21 apply pressure to each other through the main body portions 211.

In some embodiments, referring to FIG. 28, when viewed along the third direction Z, in the first direction X, the second portion 226 is located between the two second walls 211d, and when the main body portions 211 of adjacent cells 21 apply pressure to each other, the force on the first sealing portion 212a can be reduced, improving the protection of the first sealing portion 212a.

In some embodiments, referring to FIG. 28, when viewed along the third direction Z, in the first direction X, the first side portion 222 is located between the two second walls 211d, and when the main body portions 211 of adjacent cells 21 apply pressure to each other, the force on the first sealing portion 212a can be reduced, improving the protection of the first sealing portion 212a.

In some embodiments, when viewed along the third direction Z, in the first direction X, the first side extension portion 224 is located between the two second walls 211d, and when the main body portions 211 of adjacent cells 21 apply pressure to each other, the force on the first sealing portion 212a can be reduced, improving the protection of the first sealing portion 212a.

In some embodiments, the bracket 22 includes a second bracket 22b, and the second bracket 22b is connected to another first sealing portion 212a.

In some embodiments, the first bracket 22a and the second bracket 22b have the same structure.

In some embodiments, the first bracket 22a and the second bracket 22b are similar, so the repeated description of the structures identical or similar to the first bracket in the foregoing implementations will be omitted. In the following, structures different from the foregoing implementations will be focused on.

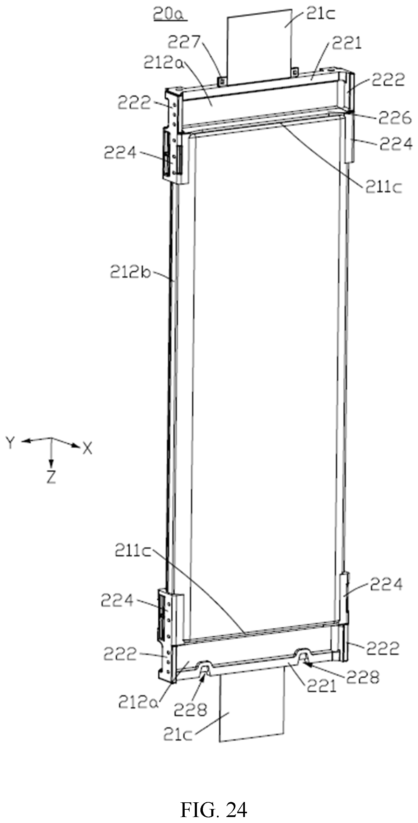

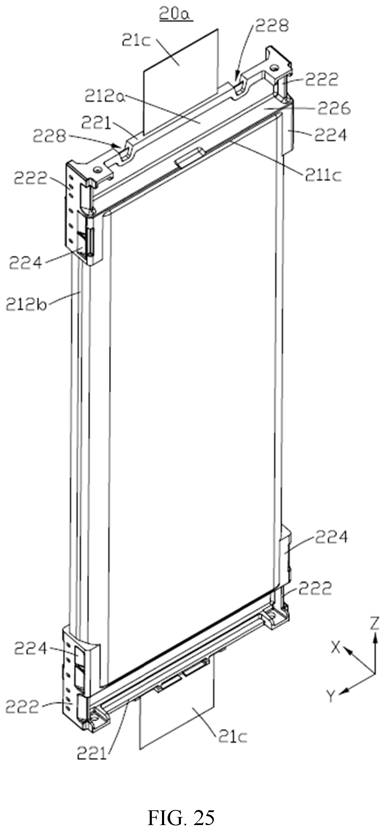

Referring to FIG. 24 and FIG. 25, in some embodiments, the second bracket 22b is provided with a notch 228, and a part of the first sealing connection portion 2121 of another first sealing portion 212a is located in the notch 228. When the cell 21 swells, the pressure inside the cell 21 can be discharged through the first sealing connection portion 2121 located in the notch 228, thereby facilitating pressure relief, improving the safety of the cell unit 20a.

In some embodiments, the notch 228 and the detection member are disposed on different brackets, lowering the risk of damaging the detection member during pressure relief.

In some embodiments, the first bracket 22a may be provided with the notch 228 as shown in the second bracket 22b.

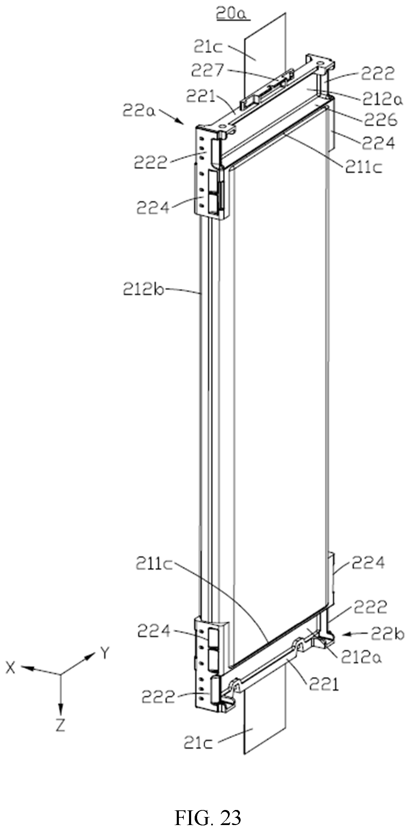

Referring to FIG. 25, in some embodiments, the second bracket 22b is not provided with the protrusion 227 as shown in FIG. 23.

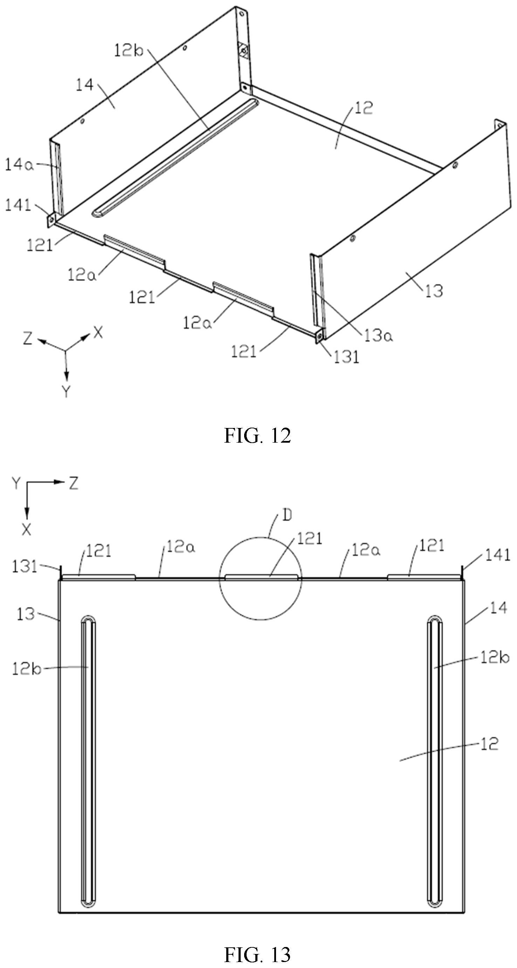

Referring to FIG. 2 and FIG. 12, in some embodiments, the top wall 11 is provided with two first limiting portions 11b, where the two first limiting portions 11b are spaced apart from each other along the third direction Z, and each first limiting portion 11b extends along the first direction X. The main body portion 211 is disposed between the two first limiting portions 11b, and the movement of the cell assembly 20 is further guided by the two first limiting portions 11b. Optionally, the two first limiting portions 11b guide the movement of the cell assembly 20 along the direction opposite to the first direction X. Optionally, the first limiting portion 11b is formed by protruding from the top wall 11 toward the bottom wall 12.

In some embodiments, the main body portion 211 of each cell unit 20a is disposed between the two first limiting portions 11b.

Referring to FIG. 2 and FIG. 12, in some embodiments, the bottom wall 12 is provided with two second limiting portions 12b, where the two second limiting portions 12b are spaced apart from each other along the third direction Z, and each second limiting portion 12b extends along the first direction X. The main body portion 211 is disposed between the two second limiting portions 12b, and the movement of the cell assembly 20 is guided by the two second limiting portions 12b. Optionally, the two second limiting portions 12b guide the movement of the cell assembly 20 along the direction opposite to the first direction X. Optionally, the second limiting portion 12b is formed by protruding from the bottom wall 12 toward the top wall 11.

In some embodiments, the main body portion 211 of each cell unit 20a is disposed between the two second limiting portions 12b.

In some embodiments, the bottom wall 12 is provided with two second limiting portions 12b, and the top wall 11 is provided with two first limiting portions 11b.

Referring to FIG. 2 to FIG. 14, in some embodiments, the elastic member 30 includes a base portion 31, a buffer portion 32, and a connection portion 33, the base portion 31 is connected to the cell assembly 20, and the buffer portion 32 is connected to the base portion 31 and the connection portion 33.

In some embodiments, along the first direction X, the cell assembly 20 is located between the base portion 31 and the rear wall 15, the rear wall 15 is connected to the cell assembly 20, the base portion 31 is connected to the cell assembly 20, and the base portion 31 is configured to apply pressure to the cell assembly 20.

In some embodiments, the base portion 31 is connected to the first cell unit 201. Optionally, the base portion 31 is in direct contact with the first cell unit 201. Optionally, the base portion 31 and the first cell unit 201 may by other components for connection.

In some embodiments, the battery pack 100 includes a first buffer member 120, and the first buffer member 120 is disposed between the base portion 31 and the first cell unit 201. Optionally, the first buffer member 120 includes foam.

In some embodiments, the hardness of the first buffer member 120 is less than the hardness of the base portion 31, reducing damage to the first cell unit 201 caused by the base portion 31.

In some embodiments, the rear wall 15 is connected to the second cell unit 202.

In some embodiments, the battery pack 100 includes a second buffer member 130, and the second buffer member 130 is disposed between the second cell unit 202 and the rear wall 15. Optionally, the second buffer member 130 includes foam.

In some embodiments, the hardness of the second buffer member 130 is less than the hardness of the rear wall 15, lowering damage to the second cell unit 202 caused by the rear wall 15.

In some embodiments, along the first direction X, the projection of the main body portion 211 is located within a projection of the base portion 31, which can increase an acting area between the base portion 31 and the main body portion 211, facilitating the base portion 31 applying pressure to the main body portion 211.

In some embodiments, the material of the foam includes ethylene-vinyl acetate copolymer (EVA).

Referring to FIG. 3, FIG. 4, FIG. 15, and FIG. 20, in some embodiments, the battery pack 100 includes a first conductive member 50. Along the third direction Z, a first gap 301 is provided between the base portion 31 and the housing 10a, one end of the first conductive member 50 is connected to the cell assembly 20, and another end passes through the first gap 301.

In some embodiments, along the third direction Z, a first gap 301 is provided between the base portion 31 and the second side wall 14.

In some embodiments, one end of the first conductive member 50 is connected to the first cell unit 201.

In some embodiments, the first conductive member 50 is fixed to the elastic member 30.

In some embodiments, the first conductive member 50 is configured to move with the elastic member 30. Under working conditions such as swelling, vibration, and drop of the cell unit, by moving the first conductive member 50 with the elastic member 30, pulling on the first conductive member 50 can be reduced, the risk of the first conductive member 50 being pulled off can be lowered, and the safety of the battery pack 100 can be improved. Optionally, the first conductive member 50 includes a wire harness.

In some embodiments, the first conductive member 50 is configured to transmit the power of the cell assembly 20. The first conductive member 50 may transmit the power of the cell assembly 20. When the battery pack 100 is discharging, the electric energy of the cell assembly 20 can be transmitted to the load of the electric device through the first conductive member 50 to supply power to the load of the electric device. When the battery pack 100 is charging, external electric energy can be transmitted to the cell assembly 20 through the first conductive member 50 to charge the cell assembly 20.

In some embodiments, the battery pack 100 includes a second conductive member 60, a second gap 302 is provided between the base portion 31 and the housing 10a, one end of the second conductive member 60 is connected to the cell assembly 20, and another end passes through the second gap 302.

In some embodiments, a second gap 302 is provided between the base portion 31 and the first side wall 13.

In some embodiments, one end of the second conductive member 60 is connected to the second cell unit 202.

In some embodiments, the second conductive member 60 and the elastic member 30 are separately disposed. Under working conditions such as swelling, vibration, and drop of the cell unit, the second conductive member 60 and the elastic member 30 are separately disposed, which is conducive to reducing pulling on the second conductive member 60, lowering the risk of the second conductive member 60 being pulled off, and improving the safety of the battery pack 100. Optionally, the second conductive member 60 includes a wire harness.

In some embodiments, the second conductive member 60 is configured to transmit the power of the cell assembly 20. The second conductive member 60 may transmit the power of the cell assembly 20. When the battery pack is discharging, the electric energy of the cell assembly 20 can be transmitted to the load of the electric device through the second conductive member 60 to supply power to the load of the electric device. When the battery pack is charging, external electric energy can be transmitted to the cell assembly 20 through the second conductive member 60, to charge the cell assembly 20.

In some embodiments, one of the first conductive member 50 and the second conductive member 60 is connected to a total positive electrode terminal of the cell assembly 20, and another is connected to a total negative electrode terminal of the cell assembly 20.

In some embodiments, the buffer portion 32 is configured to provide a swelling space for the cell assembly 20.

In some embodiments, the buffer portion 32 includes a first buffer portion 321, the first buffer portion 321 connects to the base portion 31, the first buffer portion 321 can act on the cell assembly 20 through the base portion 31, and the first buffer portion 321 can provide a swelling space for the cell assembly 20.

In some embodiments, the buffer portion 32 includes a second buffer portion 322, along the second direction Y, the first buffer portion 321 and the second buffer portion 322 are disposed opposite to each other. The first buffer portion 321 is connected to one side of the base portion 31, and the second buffer portion 322 is connected to another side of the base portion 31. The second buffer portion 322 can act on the cell assembly 20 through the base portion 31, and the second buffer portion 322 can provide a swelling space for the cell assembly 20.

In some embodiments, the connection portion 33 is fixed to the housing 10a.

In some embodiments, the connection portion 33 includes a first connection portion 331, the first connection portion 331 is connected to the first buffer portion 321. Along the first direction X, a projection of the first connection portion 331 overlaps with a projection of the first fixing portion 11a, and the first connection portion 331 is fixed to the first fixing portion 11a, which can transfer the force applied to the buffer portion 32 to the housing 10a.

In some embodiments, the first connection portion 331 is fixed to the third fixing portion 13a, which is conducive to transferring the force applied to the buffer portion 32 to the housing 10a. Optionally, the first connection portion 331 abuts against the third fixing portion 13a.

In some embodiments, the first connection portion 331 is fixed to the fourth fixing portion 14a, which is conducive to transferring the force applied to the buffer portion 32 to the housing 10a. Optionally, the first connection portion 331 abuts against the fourth fixing portion 14a.

In some embodiments, the connection portion 33 includes a second connection portion 332, the first connection portion 331 and the second connection portion 332 are disposed opposite to each other along the second direction Y. The second connection portion 332 is connected to the second buffer portion 322. Along the first direction X, a projection of the second fixing portion 12a overlaps with a projection of the second connection portion 332, and the second connection portion 332 is fixed to the second fixing portion 12a, which can transfer the force applied to the buffer portion 32 to the housing 10a.

In some embodiments, the second connection portion 332 is fixed to the third fixing portion 13a, which is conducive to transferring the force applied to the buffer portion 32 to the housing 10a. Optionally, the second connection portion 332 abuts against the third fixing portion 13a.

In some embodiments, the second connection portion 332 is fixed to the fourth fixing portion 14a, which is conducive to transferring the force applied to the buffer portion 32 to the housing 10a. Optionally, the second connection portion 332 abuts against the fourth fixing portion 14a.

In this application, the first connection portion 331 is fixed to the first fixing portion 11a, the third fixing portion 13a, and the fourth fixing portion 14a, and the second connection portion 332 is connected to the second fixing portion 12a, the third fixing portion 13a, and the fourth fixing portion 14a, which facilitates uniform stress and uniform deformation of the elastic member 30.

In some embodiments, the strength of the top wall 11, the bottom wall 12, the first side wall 13, and the second side wall 14 is greater than the strength of the elastic member 30, lowering the risk of deformation of the top wall 11, the bottom wall 12, the first side wall 13, and the second side wall 14 caused by the force applied to the buffer portion 32.

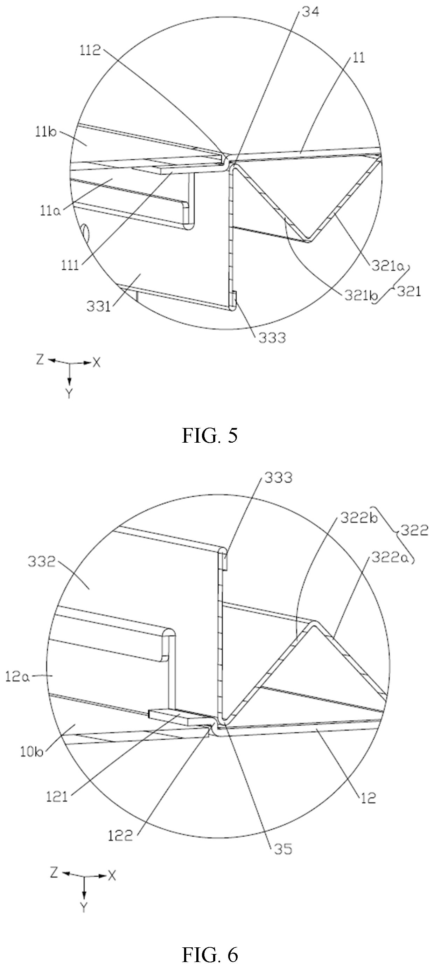

Referring to FIG. 5, FIG. 6, and FIG. 8, in some embodiments, the first buffer portion 321 includes a first segment 321a and a second segment 321b, the first segment 321a is connected to the base portion 31, and the second segment 321b connects to the first segment 321a and the first connection portion 331.

In some embodiments, an included angle formed between the first segment 321a and the base portion 31 is the same as an included angle formed between the second segment 321b and the first connection portion 331, which facilitates uniform stress and uniform deformation of the elastic member 30.

In some embodiments, the second buffer portion 322 includes a third segment 322a and a fourth segment 322b, the third segment 322a is connected to the base portion 31, and the fourth segment 322b connects to the third segment 322a and the second connection portion 332.

In some embodiments, an included angle formed between the third segment 322a and the base portion 31 is the same as an included angle formed between the fourth segment 322b and the second connection portion 332, which facilitates uniform stress and uniform deformation of the elastic member 30.

In some embodiments, the connection portion 33 is provided with a flange 333, and the flange 333 is formed by folding the connection portion 33 on a side facing away from the buffer portion 32 along second direction Y. Along the first direction X, the flange is located between the connection portion 33 and the base portion 31. The flange 333 can lower the risk of the connection portion 33 cutting the wire harness.

In some embodiments, along the first direction X, a projection of the flange 333 does not overlap with a projection of the buffer portion 32, reducing the impact on a deformation region of the buffer portion 32.

In some embodiments, the elastic member 30 includes a third bent portion 34. The third bent portion 34 abuts against the first bent portion 112, which is conducive to increasing the connection strength between the elastic member 30 and the housing 10a.

In some embodiments, the elastic member 30 includes a fourth bent portion 35. The fourth bent portion 35 abuts against the second bent portion 122, which is conducive to increasing the connection strength between the elastic member 30 and the housing 10a. This facilitates the elastic member 30 breaking open the bottom wall 12.

In some embodiments, the first extension portion 111 and the second extension portion 121 are located inside the front cover 10b, such that the front cover 10b has a limiting effect on the first extension portion 111 and the second extension portion 121, which facilitates the connection of the housing 10a to the front cover 10b.

In some embodiments, the battery pack 100 includes a first connection end 102 and a second connection end 103, and the first connection end 102 and the second connection end 103 are connected to the front cover 10b. One of the first connection end 102 and the second connection end 103 is connected to the circuit board 40, and another is connected to the first conductive member 50. The first connection end 102 and the second connection end 103 protrude from a side of the front cover 10b facing away from the cell assembly 20 for connecting an external device.

Referring to FIG. 3, in some embodiments, the battery pack 100 includes a sampling member 70, the sampling member 70 is connected to each cell 21, and the sampling member 70 is connected to the circuit board 40 to transmit the collected electrical signal of the cell 21 to the circuit board 40. Optionally, the electrode terminals 21c of adjacent cells 21 are arranged in a stacked manner, and the sampling member 70 is connected to at least one of the stacked electrode terminals 21c. Optionally, the electrical signal includes information such as current, voltage, resistance, and temperature. The sampling member 70 is welded to the electrode terminal 21c, and welding includes but is not limited to laser welding and ultrasonic welding.

In some embodiments, the battery pack 100 includes a wire 104, and the detection member is connected to the sampling member 70 through the wire 104.

Referring to FIG. 30, this application further provides an electric device 200 using at least one of the above battery packs 100. In one implementation, the electric device 200 of this application may be, but is not limited to an electronic device, a drone, a backup power source, an electric vehicle, an electric motorcycle, an electric motor bicycle, an electric tool, and a large household battery pack.

Those of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

## Claims

1. A battery pack, comprising:
a cell assembly;
a housing, the cell assembly is disposed in the housing;
a front cover connected to the housing; and
an elastic member, the elastic member and the cell assembly are arranged along a first direction, and along the first direction, one side of the elastic member is connected to the housing, and another side of the elastic member is connected to the cell assembly; wherein
the housing comprises a top wall and a bottom wall, the top wall is connected to the front cover, the bottom wall is connected to the front cover, and a connection strength between the top wall and the front cover is greater than a connection strength between the bottom wall and the front cover.

2. The battery pack according to claim 1, wherein the top wall and the bottom wall are arranged along a second direction, the top wall is provided with a first extension portion, and the first extension portion is connected to the front cover;
the bottom wall is provided with a second extension portion, the second extension portion is connected to the front cover, and the connection strength between the second extension portion and the front cover is less than the connection strength between the first extension portion and the front cover; and
the first direction is perpendicular to the second direction.

3. The battery pack according to claim 2, wherein the first extension portion is fastened and connected to the front cover.

4. The battery pack according to claim 2 or 3, further comprising a circuit board, wherein the circuit board is disposed on the front cover;
a first component is provided on a side of the circuit board, the side of the circuit board being a side facing the elastic member; and
along the second direction, a distance from the first component to the top wall is L1, and a distance from the first component to the bottom wall is L2, wherein L1 is less than L2.

5. The battery pack according to claim 4, wherein along the second direction, a distance between the bottom wall and the top wall is L0, and L1 is less than 1/4 L0.

6. The battery pack according to claim 4 or 5, wherein along the first direction, the first component protrudes from the circuit board more than other components.

7. The battery pack according to claim 2, wherein the housing comprises a first bent portion, the first bent portion connects the first extension portion, and the elastic member abuts against the first bent portion.

8. The battery pack according to claim 7, wherein the housing comprises a second bent portion, and the second bent portion connects to the second extension portion; and
the elastic member abuts against the second bent portion.

9. The battery pack according to claim 7 or 8, wherein the elastic member comprises a base portion, a buffer portion, and a connection portion; the base portion is connected to the cell assembly, and the buffer portion connects the connection portion and the base portion; and
the connection portion is fixed to the housing.

10. The battery pack according to claim 9, wherein the buffer portion comprises a first buffer portion, and the first buffer portion is connected to one side of the base portion.

11. The battery pack according to claim 10, wherein the buffer portion comprises a second buffer portion; along the second direction, the first buffer portion and the second buffer portion are disposed opposite to each other, and the second buffer portion is connected to another side of the base portion.

12. The battery pack according to claim 11, wherein the connection portion comprises a first connection portion, the elastic member comprises a third bent portion, and the third bent portion abuts against the first bent portion.

13. The battery pack according to claim 12, wherein the connection portion comprises a second connection portion, and the first connection portion and the second connection portion are disposed opposite to each other along the second direction; and
the elastic member comprises a fourth bent portion, and the fourth bent portion abuts against the second bent portion.

14. The battery pack according to claim 12 or 13, wherein the top wall is provided with a first fixing portion, the first connection portion is fixed to the first fixing portion, and along the first direction, a projection of the first fixing portion overlaps with a projection of the first connection portion.

15. The battery pack according to claim 13, wherein the bottom wall is provided with a second fixing portion, and the second connection portion is fixed to the second fixing portion; and
along the first direction, a projection of the second fixing portion overlaps with a projection of the second connection portion.

16. The battery pack according to claim 13, wherein the housing comprises a first side wall, the first side wall connects the bottom wall and the top wall, and the first side wall is fixedly connected to the front cover; and
the first side wall is provided with a third fixing portion, and the first connection portion and the second connection portion are fixed to the third fixing portion.

17. The battery pack according to claim 16, wherein the housing comprises a second side wall, the first side wall and the second side wall are arranged along a third direction, and the second side wall is fixedly connected to the front cover;
the second side wall connects the top wall and the bottom wall, the second side wall is provided with a fourth fixing portion, and the first connection portion and the second connection portion are fixed to the fourth fixing portion; and
the first direction, the second direction, and the third direction are perpendicular to each other.

18. The battery pack according to any one of claims 1 to 17, wherein the first extension portion and the second extension portion are located inside the front cover.

19. The battery pack according to any one of claims 1 to 18, wherein the housing comprises a rear wall, the rear wall connects the top wall and the bottom wall; along the first direction, the cell assembly is located between the elastic member and the rear wall, and a stiffness of the elastic member is less than a stiffness of the rear wall.

20. The battery pack according to any one of claims 1 to 19, wherein the cell assembly comprises a cell unit, the cell unit comprises a cell, the cell comprises a cell housing, an electrode assembly, and an electrode terminal, the cell housing comprises a main body portion, the electrode assembly is disposed in the main body portion, and the electrode terminal is connected to the electrode assembly and extends out of the cell housing;
the top wall is provided with two first limiting portions, and the two first limiting portions are arranged along the third direction;
the main body portion of each cell unit is disposed between the two first limiting portions;
and/or, the bottom wall is provided with two second limiting portions, and the two second limiting portions are arranged along the third direction; and
the main body portion of each cell unit is disposed between the two second limiting portions.

21. The battery pack according to any one of claims 4 to 6, wherein the first component comprises a fuse apparatus.

22. An electric device, comprising at least one battery pack according to any one of claims 1 to 21.
